Europäisches Patentamt

European Patent Office

Office européen des brevets

(19)

(11) Publication number: **0 025 364**
**B1**

(12) **EUROPEAN PATENT SPECIFICATION**

(45) Date of publication of patent specification: **16.05.84**

(51) Int. Cl.³: **H 04 N 5/06**

(21) Application number: **80303194.7**

(22) Date of filing: **11.09.80**

(54) **Digital television video signal storage system.**

(30) Priority: **11.09.79 JP 116490/79**

(43) Date of publication of application:
**18.03.81 Bulletin 81/11**

(45) Publication of the grant of the patent:
**16.05.84 Bulletin 84/20**

(84) Designated Contracting States:
**DE FR GB NL**

(56) References cited:
**US-A-3 860 952**

(73) Proprietor: **NEC CORPORATION**
**33-1, Shiba 5-chome, Minato-ku**
**Tokyo 108 (JP)**

(72) Inventor: **Kashigi, Kazuo c/o Nippon Electric Co,**
**Ltd**
**33-1, Shiba Gochome Minato-ku**
**Tokyo (JP)**
Inventor: **Kouyama, Toshitake c/o Nippon**
**Electric Co, Ltd**
**33-1, Shiba Gochome Minato-ku**
**Tokyo (JP)**

(74) Representative: **Pears, David Ashley et al**
**REDDIE & GROSE 16 Theobalds Road**
**London WC1X 8PL (GB)**

Courier Press, Leamington Spa, England.

## Description

This invention relates to a digital television video signal storage system and, more particularly, to a circuit configuration for reducing the storage capacity of a memory used in such a storage system.

One example of digital television video signal storage systems is a television signal synchronizing conversion system, known as a frame synchronizer, such as described in US Patent No. 3,909,839 entitled "A Phase Locking System for Television Signals using Digital Memory Techniques", and in an article entitled "Television Frame Synchronizer" published in the Journal of the SMPTE, Vol. 84, No. 3 (March 1975), pp. 129—134. In such a frame synchronizer, a horizontal/vertical (H/V) mixed address system is employed for providing write-in address data and read-out address data. In a frame synchronizer for an NTSC colour television signal, it is possible to construct a memory system with a minimum memory capacity by utilizing this H/V mixed address system, i.e. the efficiency of utilization of the memory can be very high.

In the PAL or SECAM colour television system having 625 scanning lines per frame and 50 frames per second, however, the memory utilization efficiency is low.

The present invention is defined in the appended claims. An embodiment of the invention will be described by way of example with reference to the drawings, in which:

Figure 1 is a block diagram of a known frame synchronizer for the NTSC television system;

Figure 2 illustrates a memory address system in the known frame synchronizer shown in Figure 1;

Figure 3 illustrates a memory address system for the PAL or SECAM television system;

Figures 4(a) and 4(b) illustrate and compare memory address updatings based on the known system and in accordance with this invention respectively;

Figure 5 is a block diagram of a synchronizer embodying the present invention for use in the PAL or SECAM television systems; and

Figure 6 is a circuit diagram of the detailed construction of a part of the embodiment shown in Figure 5.

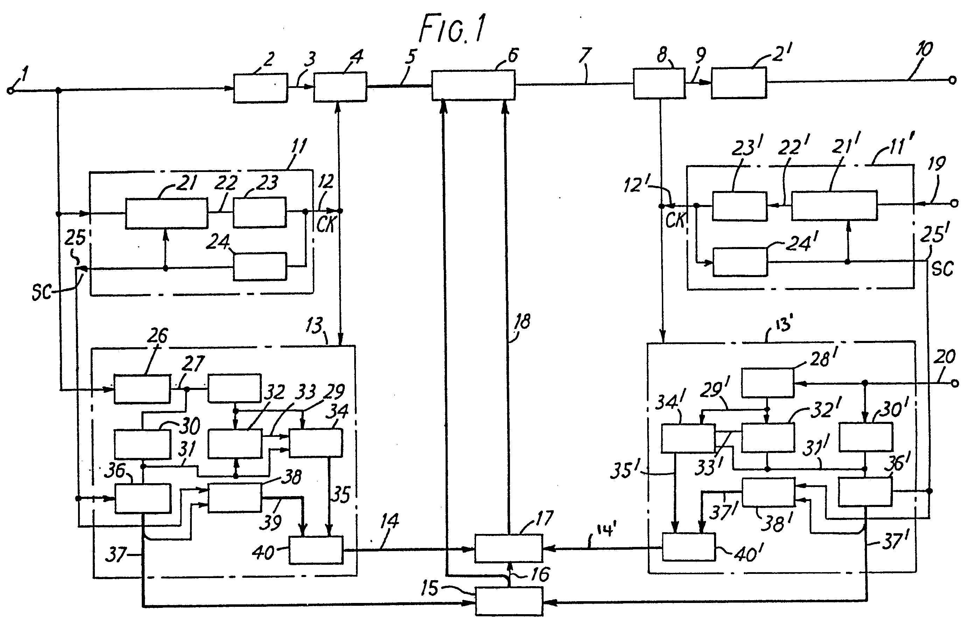

Referring to Figure 1, illustrating a block diagram of a frame synchronizer for the NTSC television system, an input television picture signal is supplied through a video signal input terminal 1 to a low pass filter 2 where undesirable high frequencies of the input signal are removed. Then the filtered input signal is sampled in an analogue-to-digital (A/D) converter 4 at a frequency of 10.7 MHz, which is three times the input sub-carrier burst frequency, and converted into pulse code modulated (PCM) parallel 8-bit data 5. Further, write clock pulses 12 and write subcarrier pulses 25, which are synchronized with the colour burst of the input signal, are formed by a burst controlled oscillator (BCO) 11 comprised of a burst gate/phase comparator 21, a clock pulse generator 23, and a 1/3 counter 24. Write-in address data 14 synchronized with a synchronizing signal of the input signal is formed by a write address generator 13. The parallel 8-bit data 5 of one frame period is written in an elastic digital memory 6 of about 2.4 Mbits, which are designated by the write-in address data 14.

A read-out clock pulse 12' and a read-out subcarrier pulse 25' which is synchronized with an external subcarrier input signal 19, are formed by a read clock generator 11'. Read-out address data 14' synchronized with an external synchronizing input signal 20 is formed by a read-out address generator 13'. In response to the read-out address data and the read-out clock, the PCM data stored in the memory 6 is read-out and converted into a pulse amplitude modulated (PAM) signal 9 by a digital-to-analogue (D/A) converter 8. The PAM signal 9 is applied to a low pass filter 2' where spurious high frequency components are filtered out. In this way, a television signal 10 synchronized with the reference signals 19 and 20 is obtained.

In the write-in address generator 13, a composite synchronizing signal 27 is separated from the composite television signal 1 by a synchronizing signal separator 26. Then, vertical (V) pulses 29 and horizontal (H) pulses 31 are separated from the composite synchronizing signal 27 by a V pulse separator 28 and an H pulse separator 30, respectively. Frame pulses 33 are formed from the V pulses 29 and the H pulses 31 by a frame pulse generator 32. Vertical address data 35 is formed from the frame pulses 33, the V pulses 29, and the H pulses 31 by a vertical address generator 34.

In this example, the number of memory cards used in the memory 6 is to be $n$ (=6). Further the 8-bit parallel data 5 of three samples, i.e. one subcarrier cycle, are written in the first memory card, the data for the next subcarrier cycle is written in the second memory card, and so on, and in this way the same amount data is written in each of the subsequent memory cards up to the final card $n$ by the same write-in address data 14. Each of the memory cards has three blocks of memory ICs (integrated circuits) A, B and C. Each block has 8 ICs to allow write-in in 8-bit parallel format. The 8-bit parallel data 5 of three samples for each memory card are written in the respective blocks A, B and C by the same write-in address data 14.

An H/V mixed address system has been used which eliminates the assignment of the memory capacity to most of the horizontal blanking period and the vertical blanking period, thereby to form a memory address 14 for providing a lessened memory capacity. Memory card write-in selecting address data 37, for making the $n$ memory cards successively subject to the write-in operation during a period of one subcarrier cycle, is formed from the H pulse 31 and the write subcarrier pulse 25 by a card selecting counter 36. The write address data 14 is changed by one after each cycle of the write-in sequence of the $n$ memory cards, that is, the horizontal address data 39 formed in a horizontal address generator 38, changes in dependence on the memory card selecting address data 37 and on the write-in subcarrier pulse 25. The vertical address data 35 and the horizontal address data 39 are mixed by an H/V address mixer 40 thereby to form the write-in address data 14.

Similarly, a read address generator 13' forms read-out address data 14' and memory card read-out selecting address data 37'. By using the memory card write-in selecting address data 37 and the memory card read-out selecting address data 37', a read/write control circuit 15 forms read/write control pulses 16 used for read-out and write-in sequence controls of the $n$ memories. A read/write selector 17 is so controlled that, in response to the read/write control pulse 16, it transforms the write-in address data 14 into a memory address 18 in the write-in mode while it transforms the read-out address data 14' into the memory address 18 in the read-out mode.

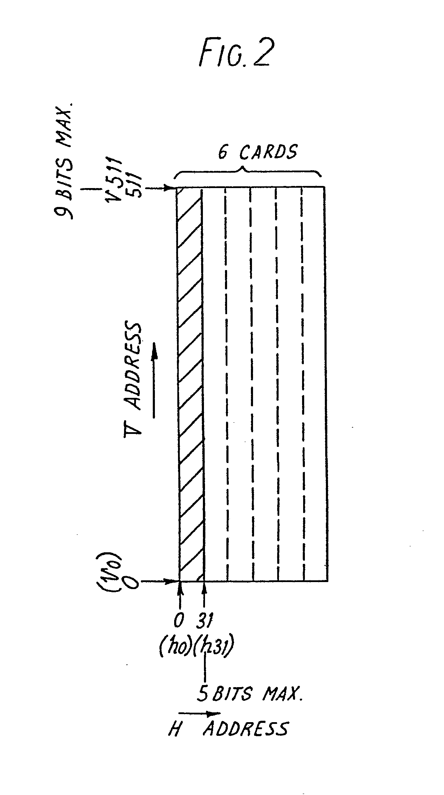

A memory address construction of the known H/V mix address system is illustrated in Fig. 2. For one frame of an interlaced television signal of 525 lines per picture at 60 frames per second, the minimum memory capacity for storing 512 scanning lines, each of which is 53.6 $\mu$s, is 2.359296 M bits

$$(\fallingdotseq 512 \text{ lines} \times 53.6 \times 10^{-6} \div \{1/(3.58 \times 10^6 \times 3)\} \times 8 \text{ bits}).$$

This minimum memory capacity, 2.359296 M bits, may be constructed by using six memory cards each including 24 memory ICs (=three IC blocks $\times$ 8 (bits)), each memory IC having 16.384 K bits. Since the 16.384 K word address is 14 bits (=9+5 bits) a satisfactory memory construction may be obtained with 9 bits ("0" to "511") being assigned to the vertical address and 5 bits ("0" to "31") to the horizontal address. The television signal of each subcarrier cycle, i.e. of three samples, is stored in the three blocks of one memory card, that is to say, the write-in operations of the three memory IC blocks are performed with one horizontal address. Thus, in the NTSC case shown in Figure 2, the picture memory device with a minimum memory capacity may be realized by using the conventional H/V mixed address system.

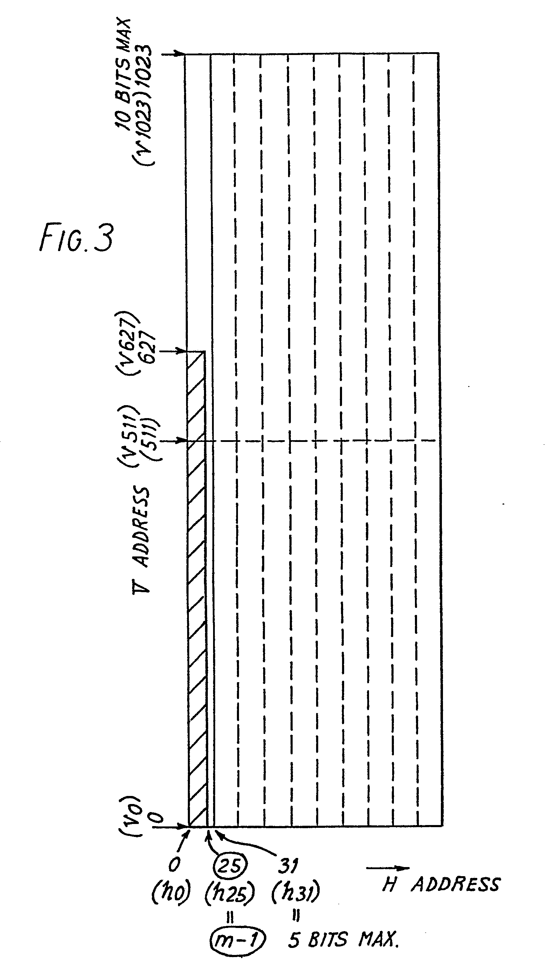

Figure 3 shows a memory address construction in case of the PAL or SECAM colour television system. The sampling frequency of the A/D converter is 13.3 MHz, which (as in the NTSC case) is three times the subcarrier frequency which is now 4.43 MHz, and the PCM data of the A/D converter is of 8-bit parallel format. In the PAL television system of 625 lines per picture and 50 frames per second, the picture information of two fields is stored, omitting the vertical blanking period except that the vertical interval test signals (VITS) in the vertical blanking period are stored. Accordingly, the memory capacity necessary to store 628 scanning lines each of 58.6 $\mu$s is 3.912664 M bits

$$(\fallingdotseq 628 \times 58.6 \times 10^{-6} \div \{1/(4.43 \times 10^6 \times 3)\} \times 8 \text{ bits}).$$

The minimum number $n$ of the memory cards of 393.216 K bits necessary for 3.912664 M bits, each memory card including 24 memory ICs (=three IC blocks $\times$ 8 bits) each having 16.384 K bits, is the next whole number above:

$$3.912664 \times 10^6 \div (393.216 \times 10^3) \therefore n = 10.$$

The 16.384 K word address is 14 bits; however, the vertical address ranges from 0 to 627 and needs 10 bits while the horizontal address ranges 0 to 25 and needs 5 bits. Thus, when the H/V mixed address system is employed for the address formation, a total of 15 bits are necessary. As a result, 20 memory cards, are needed. Further, the utilization efficiency of the memory capacity is:

$$(3.912664 \times 10^6 / 393.216 \times 10^3 \times 20) \times 100 = 49.7\%.$$

Thus, the memory efficiency is extremely low.

In Figure 3, in which the horizontal address axis along the abscissa is represented by $h$ and the vertical address axis along the ordinate by $v$, a memory capacity of the first memory card is equal to an area enclosed by four coordinates (ho, vo), h31, vo), (h31, V511), and (ho, v511). However, the memory area actually used is merely an area enclosed by coordinates (ho, vo), (h25, vo), (h25, v511) and (ho, v511). As seen from Figure 3, the portion of the horizontal address axis $h$ ranging from h26 to h31 is not used.

The memory capacity of the 11th memory card is a memory area enclosed by four coordinates (ho, v512), (h31, v512), (h31, v1023) and (ho, v1023). However, the area actually used is merely an area enclosed by coordinates (ho, v512), (h25, v512), (h25, v627) and (ho, v627).

$$(h31-h25)\times(v511+1)=(31-25)\times(511+1)=3072$$

The area used on the eleventh card is:

$$(h25+1)\times(v627-v511)=(25+1)\times(627-511)=3016.$$

The area not used on the first memory card is:

Thus, the area not used by the first memory card is larger than that actually used in the 11th card.

When considering the above referring to the memory IC of 16.384 K words or 14 bit address, it is seen that the utilization efficiency of the abscissa is insufficient though the horizontal address is 5 bits, and that the vertical address of 10 bits is larger than 9 bits ($=14-5$). As a consequence, the utilization efficiencies in the horizontal address axis and the vertical address axis are not balanced. This unbalance causes the above-described low memory efficiency.

In the present system, the utilization efficiency in the horizontal address axis direction is improved without effectively increasing the bits of an imaginary horizontal address $x$ whereby the bits of an imaginary vertical address $y$ is reduced, eliminating the use of the 11th and the subsequent memory cards.

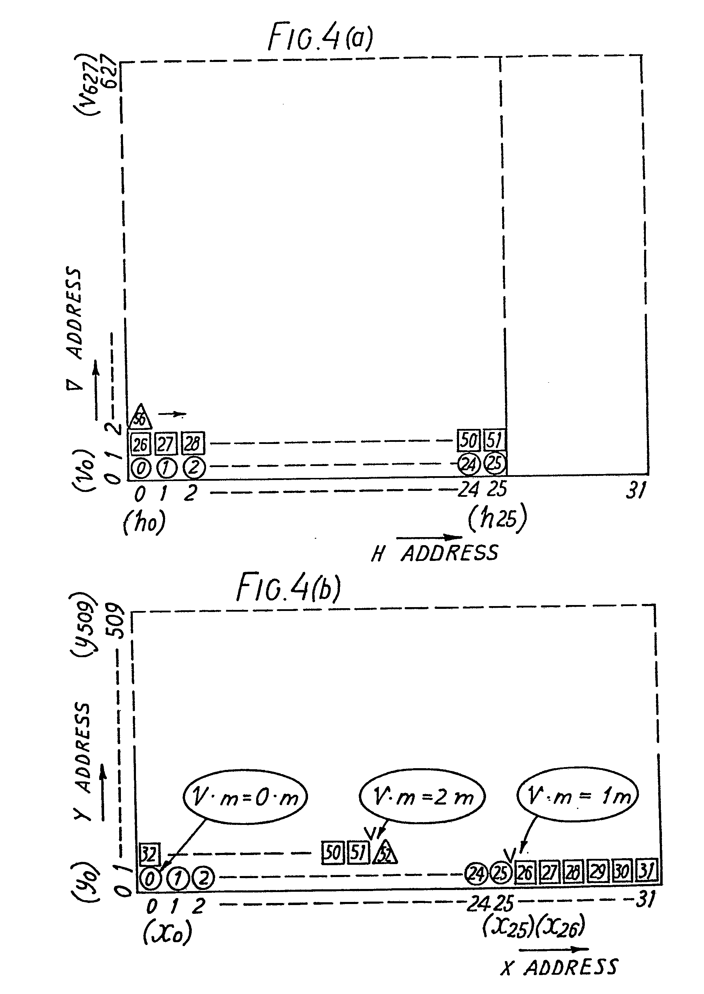

Figure 4(a) illustrates a conventional memory address updating system using two-dimensional addresses of H and V. The vertical address of the memory address changes every scanning line. In Figure 4(b), serial numbers as memory addresses are assigned in accordance with the order for storing the data into the memory, and there is illustrated how to convert the two-dimensional addresses into one-dimensional continuous addresses 0 to 16328 (14 bits) in such an order. By comparison with the diagram of Figure 4(a), in an imaginary coordinate system of X and Y of Figure 4(b), the lower 5 bits of the one-dimensional continuous address 14 bits is selected for the abscissa and the upper 9 bits for the ordinate. When comparing these, the increase of the imaginary ordinate address in Figure 4(b) is less rapid. To realise this, the vertical address from the address generator is multipled by a vertical address multiplier to be increased by $m$ which is the horizontal address number to be changed within one scanning line. Further, the output signal from the multiplier is loaded into the memory address counter at the period of the horizontal pulses and the memory address counter is incremented at the period of the memory card selecting counter.

The operation principle as mentioned above will be described referring to the comparative illustrations of Figures 4(a) and (b). The conversion of the two-dimensional address of H and V into the imaginary one-dimensional continuous address is equivalent to that in Figure 4(a), the $h$ address blocks 0 to 25 at $vo$ are arranged in a line, being followed by the $h$ address blocks 26 to 51 at $v1$. When the new abscissa X address is 5 bits, as in Figure 4(b) is equivalent to an address construction in which a series of addresses 0 to 16328 (14 bits) are divided into blocks each including the 5-bit maximum value, i.e. 32 from 0 to 31, for example, and those blocks are stacked in a new ordinate of Y addresses yo, y1,..., y509 (9 bits), as shown in Figure 4(b).

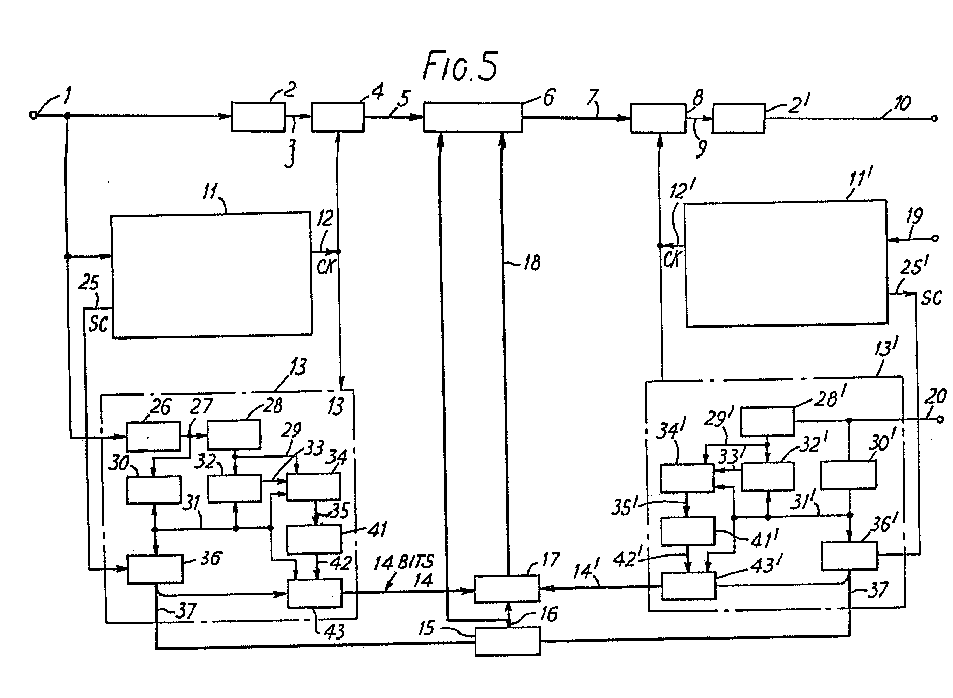

Referring to Figure 5, vertical address data 35 from a vertical address generator 34 is multiplied by $m$ (26) in a vertical address multiplier 41 thereby forming an initial value of the write-in start address data 42 for each scanning line, that is, each H start address data 42 (H=0). The H start address data 42 is given by $v\times m$ where $v$ is a vertical address data 35 and $m$ an address change value necessary for the write-in operation within the H.

In the case of Figure 4(b), for example, in the case of the vertical address $vo$, since the horizontal write-in addresses 0 to 25, the address change value necessary for write-in within $vo$ is 26. Then, each H start address data 42 is loaded as "load data" into the write-in memory address counter 43 by an H pulse 31 for determining the write start phase of each H from an H pulse generator 30. The memory address counter 43, having the write-in start address initial value of each H loaded at the start phase of each H, successively increments the write-in memory address 14 by one at the period of the most significant bit of a card selecting address 37 which provides a cycle of memory card operation sequences from a memory card selecting counter 36. The read memory address 14' is formed in a similar manner.

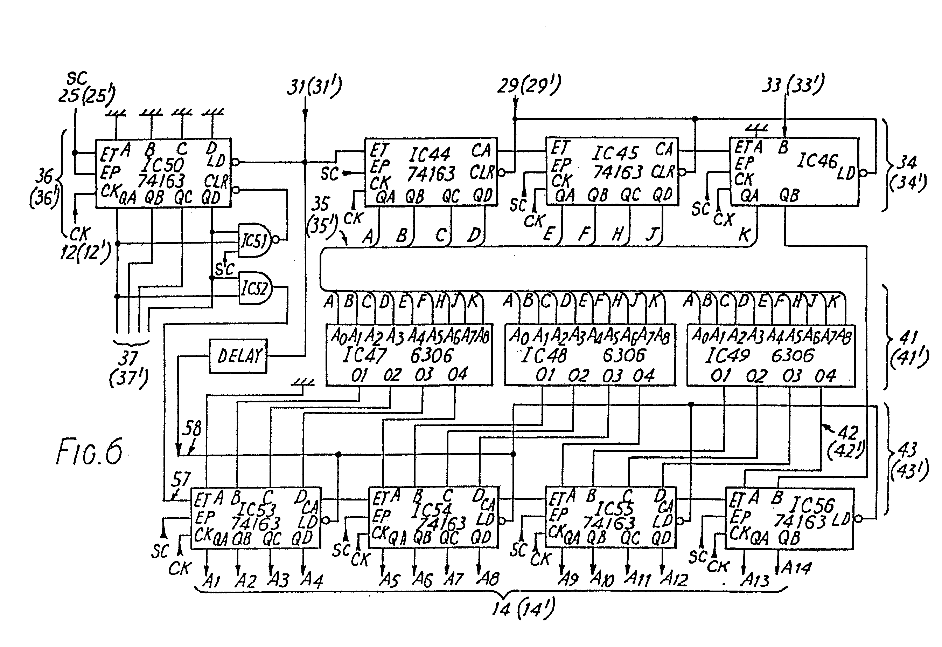

Figure 6 shows a circuit diagram of a detailed part of the embodiment where the present invention is embodied. The respective IC type numbers are shown. The vertical address 35 (35') is formed by the vertical address generator 34 (34') comprised of counters IC44 to 46.

A multiplier comprised of PROMs (programmable read only memories) IC47 to 49 first increases the vertical address 35 (35') by 13 times and further shifts the output by one bit to double it. The result is multiplication by $13\times2=26$. The memory card selection counter 36 (36') comprising a counter IC50 and a decoder IC51 cooperate to form a memory card selecting address 37 (37'). The memory card selecting counter 36 (36') and a decoder IC52 cooperatively form count enable pulses 57. A write-in start address 42 for each H is loaded as an initial value into the memory address counter 43 (43') comprised of counter ICs 53 to 56 in response to a load control pulse 58 formed from the H pulse 31 (31'). By the count enable pulse 57 of the period corresponding to 10 sub-carrier cycles, the memory address 14 (14') formed by the memory address counter 43 (43') progressively changes by one.

Generally, most of the horizontal blanking period of each H has no need of storage. In the present embodiment. 5.4 $\mu$s (=64.0−58.6) is a no-store period. Even in the no-store period, the memory address data 14 (14') is counted up, so that the load returns it to the normal start address again.

As described above, the present invention mainly uses the vertical address generator, the vertical address multiplier, the memory block (card) selecting counter, and the memory address counter, thereby there are advantageous effector of reducing the memory address bit and minimizing the memory capacity.

## Claims

1. A storage system for a colour television signal, said colour television signal including horizontal and vertical synchronizing signals and colour subcarrier, said system comprising:

memory means (6) responsive to write-in address data (14) for storing said colour television signal, said memory means including a plurality of memory blocks;

means (13) responsive to said horizontal and vertical synchronizing signals and said colour subcarrier for producing said write-in address data; and

means (13') for producing read-out address data (14'), the stored television signal being read out from said memory means in response to said read-out address data;

said write-in address data producing means including:

means (34) responsive to said vertical synchronizing signals for producing write-in vertical address data (35); and

a memory-block selecting counter (36) for producing memory-block selecting data (37), said television signal being written in said memory block selected by said memory-block selecting data; characterised by

means (41) for multiplying said write-in vertical address data (35) by a predetermined factor; and

means (43) for loading the output of said multiplying means at a period equal to that of said horizontal synchronizing signal and for counting at a rate equal to a period of said memory-block selecting counter.

2. A system according to claim 1, in which said system is adapted to process colour television signals having 625 lines per picture.

3. A system according to claim 1, in which said system is adapted to process PAL or SECAM colour television signals of 625/50 format with a colour subcarrier frequency of 4.43 MHz and in which the sample rate is substantially three times the colour subcarrier frequency.

## Patentansprüche

1. Speichersystem für ein Farbfernsehsignal, das Horizontal- und Vertikal-Synchronisationssignale und einen Farbhilfsträger enthält, wobei das System folgende Bestandteile aufweist:

eine Speichereinrichtung (6), die auf Schreib-Adressendaten (14) anspricht, um das Farbfernsignal zu speichern, und die mehrere Speicherblöcke aufweist,

eine Einrichtung (13), die auf die Horizontal- und Vertikal-Synchronisationssignale und den Farbhilfsträger anspricht, um die Schreib-Adressendaten zu erzeugen, und eine Einrichtung (13') zum Erzeugen von Auslese-Adressendaten (14'), durch die das gespeicherte Fernsehsignal aus der Speichereinrichtung ausgelesen wird,

wobei die Einrichtung zum Erzeugen der Schreib-Adressendaten aufweist,

eine Einrichtung (34), die zum Erzeugen von Schreib-Vertikaladressendaten (35) auf die vertikalen Synchronisationssignale anspricht, und

einen Speicherblock-Auswahlzähler (36) zum Erzeugen von Speicherblock-Auswähldaten (37), wobei das Fernsehsignal in den durch die Speicherblock-Auswähldaten ausgewählten Speicherblock eingelesen wird, gekennzeichnet durch,

eine Einrichtung (41) zum Multiplizieren der Schreib-Vertikaladressendaten (35) mit einem vorgegebenen Faktor und

eine Einrichtung (43) zum Belasten des Ausgangs der Multipliziereinrichtung während eines Zeitintervalls gleich dem des Horizontal-Synchronisationssignals und zum Zählen mit einer Rate gleich einer Periode des Speicherblock-Auswählzählers.

2. System nach Anspruch 1, dadurch gekennzeichnet, daß es zum Verarbeiten von Farbfernsehsignalen mit 625 Bildzeilen angepaßt ist.

3. System nach Anspruch 1, dadurch gekennzeichnet, daß es zum Verarbeiten von PAL- oder SECAM-Farbfernsehsignalen des 625/50-Formats mit einer Farbhilfsträger-Frequenz von 4,43 MHz angepaßt ist und daß die Abtastrate im wesentlichen das Dreifache der Farbhilfsträgert-frequenz beträgt.

## Revendications

1. Système de stockage pour signal de télévision en couleur, ce signal de télévision en couleur comprenant des signaux de synchronisation horizontaux et verticaux, et une sous-porteuse de couleur, ce système comprenant:

— un moyen de mémoire (6) répondant à la donnée d'adresse d'écriture (14) pour stocker le signal de télévision en couleur, ce moyen de mémoire comprenant une pluralité de blocs de mémoire;

— un moyen (13) répondant aux signaux de synchronisation horizontaux et verticaux et à la sous-porteuse de couleur pour produire la donnée d'adresse d'écriture; et

— un moyen (13') pour produire une donnée d'adresse de lecture (14'), le signal de télévision stocké étant lu dans le moyen de mémoire en réponse à la donnée d'adresse de lecture;

— le moyen de production de donnée d'adresse d'écriture comprenant:

— un moyen (34) répondant aux signaux de synchronisation verticale pour produire une donnée d'adresse verticale d'écriture (35); et

— un compteur (36) de sélection de bloc-mémoire pour produire une donnée (37) de sélection de bloc-mémoire, le signal de télévision étant écrit dans le bloc de mémoire choisi par la donnée de sélection de bloc-mémoire, caractérisé par;

— un moyen (41) pour multiplier la donnée d'adresse verticale d'écriture (35) par un facteur prédéterminé; et

— un moyen (43) pour charger la sortie du moyen de multiplication à une période égale à celle du signal de synchronisation horizontal et pour compter à une cadence égale à une période du compteur de sélection de bloc-mémoire.

2. Système selon la revendication 1, dans lequel celui-ci est destiné à traiter des signaux de télévision en couleur ayant 625 lignes par image.

3. Système selon la revendication 1, dans lequel celui-ci est destiné à traiter des signaux de télévision en couleur PAL ou SECAM de format 625/50 avec une fréquence de sous-porteuse de couleur de 4,43 MHz et dans lequel la fréquence d'échantillonnage est sensiblement le triple de la fréquence de la sous-porteuse de couleur.

FIG.1

## FIG. 2

9 BITS MAX.

6 CARDS

V 511
511

V ADDRESS

(V0)
0

0    31
(h0)(h31)

5 BITS MAX.

H ADDRESS

FIG.3

FIG.4 (a)

FIG.4 (b)

Fig.5

FIG.6